# EUROPÄISCHE PATENTSCHRIFT

(11) **EP 2 401 105 B1**
(45) Veröffentlichungstag und Bekanntmachung des Hinweises auf die Patenterteilung: **30.10.2019**
(21) Anmeldenummer: 10714850.4
(22) Anmeldetag: 23.02.2010
(51) Int. Cl.: B23D 77/04, B23C 5/24, B23B 29/034

(54) **MASCHINENWERKZEUG MIT VERSTELLBAREM PLATTENELEMENT SOWIE VERWENDUNG UND VERFAHREN ZUM EINSTELLEN DESSELBEN**
MACHINING TOOL HAVING ADJUSTABLE PLATE ELEMENT AS WELL AS USE AND METHOD OF SETTING THE SAME
OUTIL D'USINAGE AVEC PLAQUETTE RÉGLABLE AINSI QUE SON UTILISATION ET PROCÉDÉ D'AJUSTER LE MÊME

(30) Priorität: 24.02.2009 DE 102009010119
(43) Veröffentlichungstag der Anmeldung: 04.01.2012
(73) Patentinhaber: Komet Group GmbH, 74354 Besigheim (DE)
(72) Erfinder: HODZA, Erkan, 71679 Asperg (DE); FRONIUS, Jürgen, 74399 Walheim (DE); SPORS, Benno, 71672 Marbach (DE)
(74) Vertreter: Gauss, Nikolai
(86) Internationale Anmeldenummer: PCT/DE2010/050007
(87) Internationale Veröffentlichungsnummer: WO 2010/097082

(56) Entgegenhaltungen:
- EP-A1- 1 454 694
- EP-A1- 1 864 738
- EP-A2- 1 356 885
- WO-A1-95/16543
- WO-A1-2006/030416
- WO-A1-2007/058513
- WO-A1-2008/058524
- DE-A1- 2 110 078
- DE-A1- 2 163 842
- DE-A1- 19 601 666
- DE-U1- 8 025 087
- DE-U1- 20 103 921
- JP-A- 10 277 839

## Beschreibung

Die Erfindung betrifft ein Maschinenwerkzeug, mit einem Grundkörper, mit mindestens einem in einem Plattensitz am Grundkörper angeordneten Plattenelement, das wenigstens eine Plattenkante aufweist, welches über den Plattensitz frei nach außen übersteht und gegen eine Bodenstützfläche des Plattensitzes anliegt, und das mittels einer durch eine Bohrung in dem Plattenelement hindurch greifenden Schraube am Plattensitz festlegbar ist, bei dem für das Plattenelement an dem Plattensitz wenigstens ein verstellbares Widerlager vorgesehen ist, das eine Lagerfläche hat, an welcher das Plattenelement mit einer seitlichen Plattenfläche kraftschlüssig anliegt, und das eine ebene Außenabschnittsfläche und eine gekrümmte Außenabschnittsfläche aufweist, wobei das verstellbare Widerlager in einer Linearführung geführt ist, die einen kreisbogenförmig gekrümmten Führungsabschnitt und einen als Planfläche gestalteten Führungsabschnitt hat, und bei dem an dem Plattensitz ein weiteres Widerlager mit einer Lagerfläche für das kraftschlüssige Anliegen einer seitlichen Plattenfläche des Plattenelements ausgebildet ist, wobei zur Einstellung der Plattenkante des Plattenelements dem verstellbaren Widerlager eine Verstelleinrichtung zugeordnet ist, die in Bezug auf die Bodenstützfläche des Plattensitzes ein Anheben und Absenken dieses Widerlagers ermöglicht, und wobei die gekrümmte Außenabschnittsfläche des verstellbaren Widerlagers mit geringem Spiel an dem kreisbogenförmig gekrümmten Führungsabschnitt und die ebene Außenabschnittsfläche des ersten Widerlagers an dem als Planfläche gestalteten Führungsabschnitt der Linearführung liegt, um die bei der Einstellung des Plattenelements an dem Widerlager auftretenden Kräfte und Momente aufzunehmen und in den Grundkörper einzuleiten.

Aus der EP 1 356 885 A2 ist ein derartiges Maschinenwerkzeug bekannt. Dieses Maschinenwerkzeug ist als ein sogenannter Scheibenfräser ausgebildet, der für das Fräsen von Kurbelwellen mit einer oberen und einer unteren Fläche sowie umlaufenden Seitenflächen dient, welche die oberen und unteren Flächen miteinander verbinden.

In der DE 196 01 666 A1 ist ein Maschinenwerkzeug zum Reiben mit Schneidplatten und einem Schneidplatten-Verstellmechanismus beschrieben. Die Schneidplatten sind mit einer Spannschraube in einem Plattensitz am Grundkörper des Maschinenwerkzeugs festgelegt. Für eine Schneidplatte gibt es einen Verstellmechanismus. Diese Schneidplatte hat einen der wirksamen Schneide gegenüberliegenden Abschnitt mit einer ersten und einer zweiten Ausnehmung. An der ersten Ausnehmung gibt es eine Verstellschraube. Bei der zweiten Ausnehmung befindet sich ein Anschlagbolzen. Die Verstellschraube und der Anschlagbolzen bilden Widerlager für die Schneidplatte. Die Verstellschraube lässt sich durch Drehen gegenüber dem Plattensitz anheben und absenken. Hierdurch lässt sich die Schneidkante der Schneidplatte am Plattensitz einstellen.

Beim Verstellen der Schneidplatte wirkt auf die Verstellschraube eine Biegekraft. Diese wird über das Gewinde der Verstellschraube in den Grundkörper des Maschinenwerkzeugs eingeleitet. Die Belastung der Verstellschraube mit Biegekräften erfordert große Verstellkräfte beim Einstellen der Schneidplatte und ist der Einstellgenauigkeit abträglich.

Aufgabe der Erfindung ist es, ein Maschinenwerkzeug mit verstellbarem Plattenelement bereitzustellen, bei dem die Position eines Plattenelements, insbesondere eine Schneidplatte und/oder eine Führungsplatte, exakt und mit vergleichsweise geringem Kraftaufwand an einem Plattensitz eingestellt werden kann.

Diese Aufgabe wird durch ein Maschinenwerkzeug mit den Merkmalen des Anspruchs 1 gelöst.

Der erfindungsgemäßen Lösung liegt die Erkenntnis zugrunde, dass bei einem Maschinenwerkzeug ein in einem Plattensitz festgelegtes Plattenelement, insbesondere eine Schneidplatte oder eine Führungsplatte, mittels wenigstens eines einstellbaren Widerlagers sehr fein justiert werden kann, wenn die bei der Einstellung des Plattenelements auf das Widerlager übertragenen Kräfte und Momente, insbesondere Biege- und Torsionsmomente, nicht durch eine Verstellschraube sondern über eine Linearführung für das Widerlager in den Grundkörper des Maschinenwerkzeugs eingeleitet werden.

Dies ermöglicht eine Einstellung des Maschinenwerkzeugs, bei der in einem ersten Schritt das Plattenelement im Plattensitz durch Verstellen eines Widerlagers auf ein Untermaß vorpositioniert wird, in einem darauf folgenden zweiten Schritt das Plattenelement im Plattensitz am Grundkörper mittels der durch eine Bohrung in dem Plattenelement hindurch greifenden Schraube vorzugsweise unter Verwendung eines Drehmomentschlüssels definiert festgelegt wird, und dann in einem dritten Schritt das Widerlager unter gleichzeitiger Vermessung der Einstellung des Plattenelements auf ein gewünschtes Sollmaß nachgestellt wird.

Bevorzugt weist der Grundkörper des Maschinenwerkzeugs eine Werkzeugachse auf, die eine Drehachse ist, um die der Grundkörper des Maschinenwerkzeugs angetrieben werden kann. Die Werkzeugachse des Maschinenwerkzeugs kann jedoch auch eine Rotationsachse für ein Werkstück sein, das zur Bearbeitung mit dem Maschinenwerkzeug relativ zu dessen Grundkörper um die Werkzeugachse rotierend bewegt wird.

Das am Plattensitz festgelegte Plattenelement lässt sich bei dem erfindungsgemäßen Maschinenwerkzeug einstellen, ohne dass die durch ihre Bohrung hindurch greifende Befestigungsschraube für das Plattenelement gelöst werden muss.

Demgegenüber erfordert das Einstellen von Plattenelementen in Form von Schneidplatten bei herkömmlichen Maschinenwerkzeugen, dass die Klemm- bzw. Befestigungsschraube für eine Schneidplatte oder eine entsprechende Klemmpratze beim sogenannten Justieren der Schneidplattenposition gelöst wird. Hier tritt dann das Problem auf, dass sich eine Schneidplatte beim anschließend erforderlichen neuerlichen Festlegen mit der Klemm- bzw. Befestigungsschraube oder Klemmpratze wieder dejustiert. Im Vergleich zu herkömmlichen Maschinenwerkzeugen kann deshalb das erfindungsgemäße Maschinenwerkzeug in kürzerer Zeit und mit weniger Arbeitsschritten eingestellt werden.

Indem die Lagerfläche des wenigstens einen Widerlagers oder die an dem Widerlager anliegende seitliche Plattenfläche des Plattenelements konvex gekrümmt ist oder mit segmentförmigen Flächenabschnitten, die aneinandergereiht sind, prismatisch gekrümmt ist, wird bewirkt, dass das Widerlager aufgrund eines geringen Spiels in der Linearführung an der seitlichen Plattenfläche des Plattenelements abrollen kann. Beim Verstellen eines Plattenelements treten dann keine Setzeffekte auf und das Widerlager in der Linearführung wird nicht verklemmt. Insbesondere ist es von Vorteil, das verstellbare Widerlager als Verstellkeil mit gekrümmter Keilfläche auszuführen. Die Keilfläche ist dabei vorzugsweise in einer ersten Richtung und zusätzlich in einer von der ersten Richtung verschiedenen zweiten Richtung konvex gekrümmt. So wird eine Punkt- bzw. Linienanlage eines Widerlagers und der daran anliegenden seitlichen Plattenfläche des Plattenelements bewirkt. Es ist eine weitere Erkenntnis der Erfindung, dass sich hierdurch übermäßige Rückmomente vermeiden lassen, welche ein Plattenelement bei der spanenden Bearbeitung von Werkstoffen in ein entsprechendes Widerlager einleitet. So lässt sich unterbinden, dass ein Plattenelement, insbesondere eine Schneidplatte beim Bearbeiten von Werkstoffen mit dem Maschinenwerkszeug insbesondere aufgrund des sogenannten Rattereffekts undefiniert verstellt wird.

Vorteilhafterweise ist bei dem Maschinenwerkzeug nicht nur ein Widerlager verstellbar ausgeführt, sondern es gibt zwei oder mehr verstellbare Widerlager, welche in Bezug auf die Bodenstützfläche des Plattensitzes angehoben und abgesenkt werden können und die auf eine seitliche Plattenfläche des Plattenelements wirken. Auf diese Weise ist es möglich, ein Plattenelement an dem Maschinenwerkzeug mit mehreren Freiheitsgraden definiert zu positionieren, insbesondere zu drehen und zu verschieben.

Wenn bei einem Maschinenwerkzeug dabei als Plattenelement eine Schneidplatte mit einer Schneidecke eingesetzt wird, die den Durchmesser erzeugt, ist es günstig, das verstellbare Widerlager derart am Plattensitz anzuordnen, dass die durch das Widerlager in die Schneidplatte eingeleitete Verstellkraft zu der Schneidecke weist. Hierdurch lässt sich erreichen, dass der Durchmesser des Maschinenwerkzeugs allein über die Einstellung dieses Widerlagers definiert werden kann.

Ein Plattenelement, insbesondere eine Schneidplatte an einem Plattensitz des Maschinenwerkzeugs kann mit einer gemeinsamen seitlichen Plattenfläche oder mit unterschiedlichen seitlichen Plattenflächen an den Widerlagern für die Schneidplatten anliegen.

Es ist günstig, alle verstellbaren Widerlager in einer Linearführung anzuordnen, die bei der Einstellung des Plattenelements auftretende Kraft- und Torsionsmomente aufnimmt und in den Grundkörper des Maschinenwerkzeugs einleitet.

Als Verstelleinrichtung für ein Widerlager eignet sich insbesondere eine am Widerlager und im Grundkörper des Maschinenwerkzeugs geführte Differentialschraube. Die Differentialschraube hält das Widerlager. Die Anordnung gewährleistet, dass bei einem Verstellen des Plattenelements die Differentialschraube nur in der Richtung ihrer Achse auf Zug bzw. Druck beansprucht wird. Unerwünschte Biegemomente treten bei dieser Anordnung an der Differentialschraube nicht auf. Damit kann die Differentialschraube, ohne dass Kraftspitzen auftreten, sehr präzise eingestellt werden.

Vorzugsweise hat das Widerlager eine gekrümmte Lagerfläche mit einem Scheitelpunkt. Die Linearführung weist einen kreisbogenförmig gekrümmten Führungsabschnitt für die Linearführung auf, wobei die Achse der Differentialschraube im Zentrum dieses kreisbogenförmig gekrümmten Führungsabschnitts liegt. Dabei ist der Krümmungsradius der Lagerfläche im Scheitelpunkt auf die Linearführung abgestimmt: Er ist nicht wesentlich größer als der 12-fache Abstand des Scheitelpunkts von der Achse der Differentialschraube. Vorzugsweise entspricht der Krümmungsradius der Lagerfläche im Scheitelpunkt dem 8- bzw. 10-fachen des Abstands des Scheitelpunkts von der Achse der Differentialschraube, d.h. dem 8- bzw. 10-fachen des Krümmungsradius für den kreisbogenförmig gekrümmten Führungsabschnitt der Linearführung. Es hat sich gezeigt, dass diese Maßnahme ermöglicht, sehr hohe Verstellkräfte mit dem Widerlager aufzunehmen, ohne dass sich das Widerlager in der Linearführung verklemmt.

Die Differentialschraube kann an dem Grundkörper des Maschinenwerkzeugs im Bezug auf die Bodenstützfläche für die Schneidplatte am Plattensitz mit Neigung angeordnet werden. Das ermöglicht, die Größe einer durch das entsprechende verstellbare Widerlager auf das Plattenelement übertragenen Verstellkraft sehr genau zu justieren.

Das erfindungsgemäße Maschinenwerkzeug eignet sich insbesondere zur Verwendung als Werkzeug für das Herstellen von feinstbearbeiteten Bohrungen in einem Werkstück mit einem einzigen Bearbeitungsschnitt, der die herkömmlichen Bohroperationen Aufbohren und Feinbohren abdeckt. Dies bedingt nämlich eine spezielle Schneidengeometrie, die besonders gut an Schneidplatten ausgebildet werden kann.

Das erfindungsgemäße Maschinenwerkzeug kann z.B. als Reibwerkzeug, als Bohrwerkzeug, insbesondere als Werkzeug zum Aufbohren und/oder als Werkzeug zum Feinbohren, aber auch als Fräswerkzeug eingesetzt werden.

Im Folgenden wird die Erfindung anhand der in der Zeichnung in schematischer Weise dargestellten Ausführungsbeispiele näher erläutert. Es zeigen:
- Fig. 1: ein erstes Maschinenwerkzeug mit verstellbaren Schneidplatten;
- Fig. 2: einen Plattensitz am ersten Maschinenwerkzeug ohne Schneidplatte;
- Fig. 3: eine Schneidplatte des ersten Maschinenwerkzeugs;
- Fig. 4a: und b Ansichten eines verstellbaren Widerlagers für eine Schneidplatte an dem ersten Maschinenwerkzeug;
- Fig. 5: eine Differentialschraube als Verstelleinrichtung für das verstellbare Widerlager;
- Fig. 6: einen Abschnitt des ersten Maschinenwerkzeugs mit einer verstellbaren Schneidplatte;
- Fig. 7: eine alternative Ausführungsform eines verstellbaren Widerlagers;
- Fig. 8: einen Abschnitt eines zweiten Maschinenwerkzeugs mit einer verstellbaren Schneidplatte;
- Fig. 9: eine Schneidplatte des zweiten Maschinenwerkzeugs mit einem ersten, zweiten und dritten Widerlager;
- Fig. 10: einen Abschnitt eines dritten Maschinenwerkzeugs mit verstellbaren Schneidplatten;
- Fig. 11: einen Abschnitt eines vierten Maschinenwerkzeugs mit verstellbaren Schneidplatten;
- Fig. 12: ein fünftes Maschinenwerkzeug mit zwei verstellbaren Schneidplatten;
- Fig. 13: einen Abschnitt des fünften Maschinenwerkzeugs;
- Fig. 14: eine Schneidplatte des fünften Maschinenwerkzeugs mit einem verstellbaren Widerlager;
- Fig. 15: ein sechstes Maschinenwerkzeug mit vier verstellbaren Schneidplatten;
- Fig. 16: einen Abschnitt des sechsten Maschinenwerkzeugs mit einer verstellbaren Schneidplatte;
- Fig. 17: ein siebtes Maschinenwerkzeug mit verstellbaren Schneidplatten, das eine verstellbare Führungsplatte aufweist; und
- Fig. 18: einen Abschnitt des siebten Maschinenwerkzeugs mit der verstellbaren Führungsplatte.

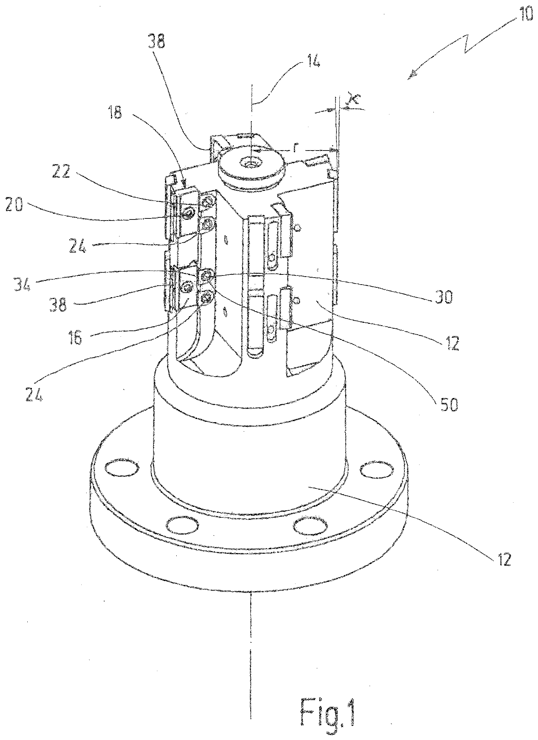

Das in Fig. 1 gezeigte erste Maschinenwerkzeug 10 ist ein Reibwerkzeug. Es hat einen Grundkörper 12. Der Grundkörper 12 hat eine Werkzeugachse 14. Die Werkzeugachse 14 ist eine Drehachse. Das Maschinenwerkzeug 10 kann durch Anschluss an eine Maschinenspindel einer nicht weiter dargestellten Werkzeugmaschine um die Drehachse 14 bewegt werden. Am Grundkörper 12 des Maschinenwerkzeugs 10 sind acht Plattenelemente in Form von Wechselschneidplatten 16 angeordnet. Eine jede Wechselschneidplatte 16 liegt in einem Plattensitz 18. Jede Wechselschneidplatte 16 ist in ihrem Plattensitz 18 mit einer Schraube 20 am Grundkörper 12 des Maschinenwerkzeugs 10 festgelegt. Die Schraube 20 wirkt als Klemm- bzw. Befestigungsschraube für die Schneidplatten 16.

Am Plattensitz 18 der Schneidplatten 16 gibt es jeweils ein erstes verstellbares Widerlager 22 und ein zweites verstellbares Widerlager 24. Durch Einstellen der Widerlager 22,24 wird die Schraube 20 elastisch verformt. Hierdurch kann für eine am Plattensitz 18 angeordnete Wechselschneidplatte 16 ein Radius r und ein Konizitätswinkel κ in Bezug auf die Drehachse 14 justiert werden.

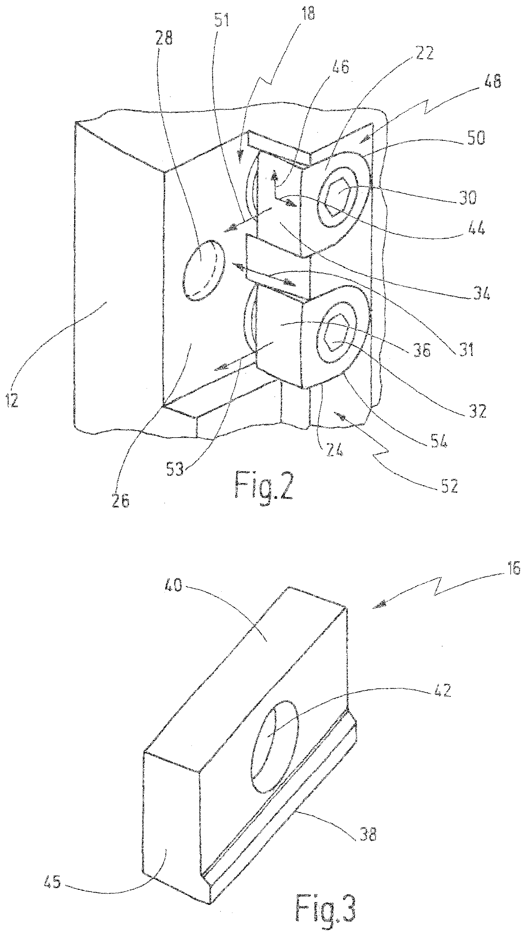

Die Fig. 2 zeigt einen am Grundkörper 12 des Maschinenwerkzeugs ausgebildeten Plattensitz 18 ohne die Schneidplatte. Der Plattensitz 18 hat eine Bodenstützfläche 26. In der Bodenstützfläche 26 befindet sich eine Gewindebohrung 28 für die Schraube 20.

Die Widerlager 22 und 24 sind als Verstellkeil mit je einer Keilfläche 34, 36 gestaltet, die in zwei unterschiedlichen Richtungen 44,46 konvex gekrümmt ist. Die Keilflächen 34, 36 sind zur Bodenstützfläche 26 des Plattensitzes 18 hin geneigt. Sie wirken als gekrümmte Lagerflächen 34,36 für die seitliche Plattenfläche 40 einer Schneidplatte 16, die der als Schneidkante 38 ausgebildeten Plattenkante der Schneidplatte 16 gegenüber liegt.

Für die Widerlager 22 und 24 ist im Grundkörper 12 des Maschinenwerkzeugs jeweils in einem Abschnitt 48 eine Linearführung 50 und in einem Abschnitt 52 eine Linearführung 54 ausgebildet. Die Linearführungen 50,54 nehmen Kraft- und Torsionsmomente auf, die aufgrund von Verstellkräften für die Schneidplatte an den Widerlagern 22,24 auftreten. Sie leiten diese in den Grundkörper 12 des Maschinenwerkzeugs 10 ein.

Als Verstelleinrichtung für die Widerlager 22,24 ist eine Differentialschraube 30 und eine Differentialschraube 32 vorgesehen. Jeder Differentialschraube 30,32 ist ein erstes Gewinde 33 am Grundkörper 12 des Maschinenwerkzeugs 10 und ein zweites Gewinde 56 in einem Widerlager zugeordnet.

Die Fig. 3 zeigt eine Schneidplatte 16. In der Schneidplatte 16 ist ein Durchgangsloch 42 mit einer Senkung für die Schraube 20 ausgebildet.

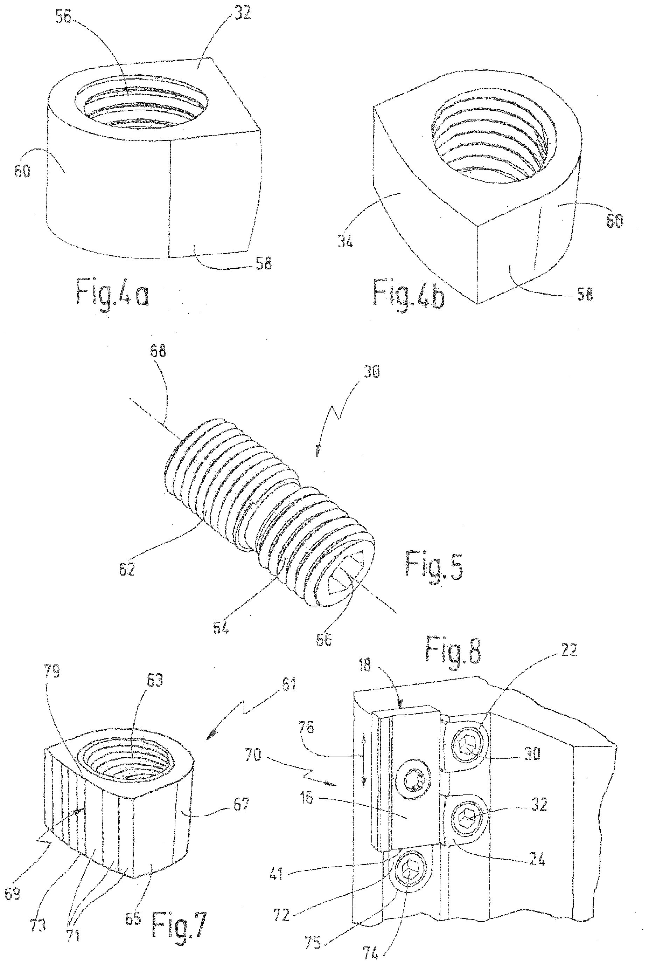

In Fig. 4a und Fig. 4b sind unterschiedliche perspektivische Darstellungen des Widerlagers 22 abgebildet. Das Widerlager 22 hat eine Gewindebohrung 56 für die Differentialschraube 30. Es liegt mit dem ebenen Tangentialflächenabschnitt 58 und dem gekrümmten Außenflächenabschnitt 60 unter geringem Spiel formschlüssig in der Führung 50 am Grundkörper des Maschinenwerkzeugs. Entsprechendes gilt für das Widerlager 24.

Die Fig. 5 zeigt die Differentialschraube 30 für das Widerlager 22. Die Differentialschraube 30 hat ein erstes Gewinde 62 und ein zweites Gewinde 64. Die Gewinde 62 und 64 sind gegenläufig ausgeführt. Für das Gewinde 62 gibt es ein Gegengewinde im Grundkörper 12 des Maschinenwerkzeugs 10. Das Gegengewinde zu dem Gewinde 64 ist die Gewindebohrung 56 im Widerlager 22. Die Differentialschraube 30 hat einen Schlüsseleingriff 66 zum Anschluss eines Verstellschlüssels. Entsprechendes gilt für die Differentialschraube 32 von Widerlager 24. Der Schlüsseleingriff 66 ist vorzugsweise als Innensechskant ausgebildet.

Mittels der Differentialschrauben 30,32 können die Widerlager 22,24 gegenüber der Bodenstützfläche 26 am Plattensitz 18 der Schneidplatte entsprechend dem in Fig. 2 gezeigten Doppelpfeil 31 angehoben und abgesenkt werden.

Durch Heben und Senken der Widerlager 22,24 können unterschiedliche, definierte, sehr hohe entsprechend der Pfeile 51,53 verlaufende Verstellkräfte in die Schneidplatte 16 eingeleitet werden. Dies ermöglicht, die Lage der Schneidkante 38 der Schneidplatte 16 genau einzustellen und insbesondere eine Justage von Radius r und ein Konizitätswinkel *κ* der Schneidplatte 16 in Bezug auf die Werkzeugachse 14 des Maschinenwerkzeugs 10 vorzunehmen.

Dabei bewirkt die Führung 50 und 54 am Grundkörper 12 für die Widerlager 22,24, dass die Verstellkräfte für die Schneidplatte 16 in den Grundkörper 12 eingeleitet werden, ohne dabei Scherkräfte und Biegemomente auf die Differentialschrauben 30 und 32 zu übertragen: Über die ebenen Außenabschnittsflächen 58 des Widerlagers 22 werden an diesem auftretende Dreh- und Kippmomente in den Grundkörper 12 des Maschinenwerkzeugs 10 eingeleitet. Die gekrümmte Außenabschnittsfläche 60 eines Widerlagers 22 führt entsprechend Kraft- und Kippmomente zum Grundkörper 12 des Maschinenwerkzeugs ab. Entsprechendes gilt für das Widerlager 24. Damit wird die Differentialschraube 30,32 beim Einstellen von Radius r und Konizitätswinkel *κ* einer Schneidplatte 16 am Maschinenwerkzeug 10 lediglich mit Zug- bzw. Druckkräften belastet, die in Richtung der Achse 68 der Differentialschraube 30,32 wirken.

Weil die Lagerflächen 34 und 36 der Widerlager 22,24 gekrümmt sind, wirken die Widerlager 22,24 nahezu punktförmig auf die Plattenfläche 40 einer am Plattensitz 18 angeordneten Schneidplatte.

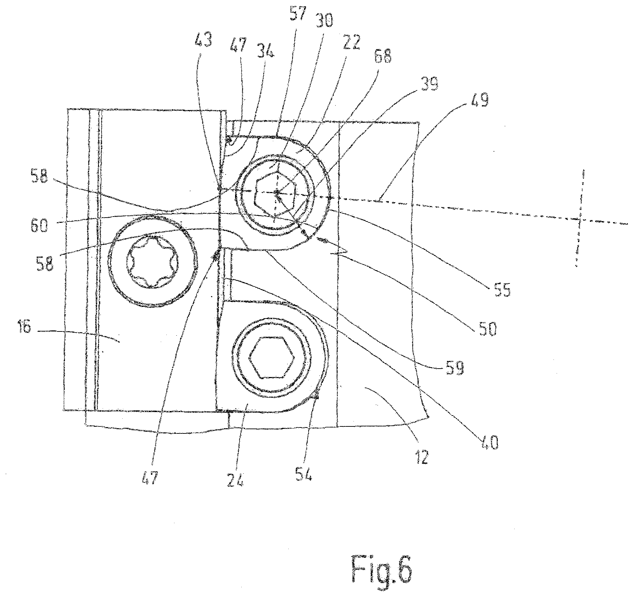

Die Fig. 6 zeigt einen Abschnitt des Maschinenwerkzeugs 10 mit einer Schneidplatte 16. Die Lagerfläche 34 vom Widerlager 22 ist entsprechend einem Krümmungskreis ausgeführt, dessen Radius 49 am Scheitelpunkt 43 die Achse 68 der Differentialschraube 30 schneidet. Die Linearführung 50 hat einen kreisbogenförmig gekrümmten Führungsabschnitt 55 und einen Führungsabschnitt 57 sowie einen Führungsabschnitt 59. Die Führungsabschnitte 57 und 59 sind als Planflächen gestaltet. An dem kreisbogenförmig gekrümmten Führungsabschnitt 55 liegt mit geringem Spiel der Außenflächenabschnitt 60 von Widerlager 22. Entsprechend liegt der ebene Tangentialflächenabschnitt 58 von Widerlager 22 an den als Planflächen ausgebildeten Führungsabschnitten 57 und 59. Der Scheitelpunkt 43 der Lagerfläche 34 und die Achse 68 der Differentialschraube 30 haben einen Abstand, der das 8-fache des Radius 39 beträgt. Das Verhältnis von Radius 49 und Radius 39 könnte aber z.B. auch 10:1 betragen, es sollte allerdings 12:1 nicht wesentlich übersteigen. Wichtig ist, dass das Spiel des Widerlagers 22 in der Linearführung 50 so gering ist, dass das Widerlager 22 und die seitliche Plattenfläche 40 der Schneidplatte 16 im Eckbereich 47 nicht aneinander liegen können. Auf diese Weise wird gewährleistet, dass sich das Widerlager 22 in der Linearführung 50 nicht verklemmen kann und dass die von der Schneidplatte 16 in das Widerlager 22 eingeleiteten Kräfte im Wesentlichen über den kreisbogenförmig gekrümmten Führungsabschnitt 55 der Linearführung 50 abgefangen werden. Entsprechendes gilt für das Widerlager 24 in der Linearführung 54. Mit dieser Maßnahme lassen sich insbesondere störende Setzeffekte bei der Justage der Schneidplatte 16 vermeiden.

Es sei bemerkt, dass anstelle die Lagerflächen 34,36 der Widerlager 22,24 gekrümmt auszuführen, die seitliche Plattenfläche 40 der Schneidplatte 16 mit konvexer Krümmung gestaltet werden kann. Auch ist es möglich, sowohl die Lagerflächen 34,36 der Widerlager 22,24 als auch die seitliche Plattenfläche 40 mit Krümmung auszuführen. Eine konvexe Krümmung der entsprechenden Bauteile in zwei unterschiedlichen Richtungen gewährleistet, dass sich die einzubringende Verstellkraft für ein Justieren der Schneidplatten durch Einstellen der Differentialschrauben relativ gleichmäßig ändert.

Das in Fig. 1 gezeigte Maschinenwerkzeug kann auch als Fräswerkzeug eingesetzt werden, wenn es anstelle der Wechselschneidplatten 16 mit Schneidplatten zum Fräsen ausgerüstet wird.

Die Fig. 7 zeigt eine alternative Ausführungsform 61 für ein Widerlager bei dem in Fig. 1 gezeigten Maschinenwerkzeug. Auch hier ist eine Gewindebohrung 63 für die Differentialschraube 30 vorgesehen. Die alternative Ausführungsform 61 für ein Widerlager hat wie das Widerlager 22 in Fig. 4 einen ebenen Tangentialflächenabschnitt 65 und einen gekrümmten Außenflächenabschnitt 67. Die Flächenabschnitte 65 und 67 ermöglichen das formschlüssige Anliegen in der Führung 50 am Grundkörper 12 des Maschinenwerkzeugs.

Bei dem Widerlager 61 ist eine prismatisch gekrümmte Lagerfläche 69 ausgebildet. Die prismatisch gekrümmte Lagerfläche 69 besteht aus einer Vielzahl von Flächenabschnitten 71, die segmentförmig aneinandergereiht sind. Diese Flächenabschnitte können beispielsweise durch Schleifen hergestellt werden. Die Flächenabschnitte 71 sind bei dem Widerlager 61 eben gestaltet. Sie verlaufen von einer unteren Kante 73 der Lagerfläche 69 zu einer oberen Kante 79. An einem Plattensitz 18 des in Fig. 1 gezeigten Maschinenwerkzeugs 10 sind die segmentförmig aneinander gereihten Flächenabschnitte 71 jeweils zur Bodenstützfläche 26 des Plattensitzes 18 hin geneigt. Auch die prismatisch gekrümmte Lagerfläche 69 ist somit eine Keilfläche.

Bei dem in Fig. 8 gezeigten Abschnitt eines zweiten Maschinenwerkzeugs 70 gibt es am Plattensitz 18 eines Plattenelements in Form einer Schneidplatte 16 neben einem ersten und einem zweiten verstellbaren Widerlager 22,24, welche die Bauform der Widerlager bei dem Maschinenwerkzeug 10 aus Fig. 1 haben, zusätzlich ein drittes verstellbares Widerlager 72. Das Widerlager 72 befindet sich in einer Linearführung 75 und ist konstruktiv wie die Widerlager 22 und 24 ausgeführt. Es wirkt auf die seitliche Plattenfläche 41 der Schneidplatte 16. Durch Verstellen der den Widerlagern 22,24,72 zugeordneten Differentialschrauben 30,32 und 74 lässt sich hier nicht nur der Radius und die Konizität der Schneidplatte 16 in Bezug auf die Drehachse des Maschinenwerkzeugs 70 einstellen, sondern darüber hinaus auch die Position der Schneidplatte 16 entsprechend den Richtungen des Doppelpfeils 76.

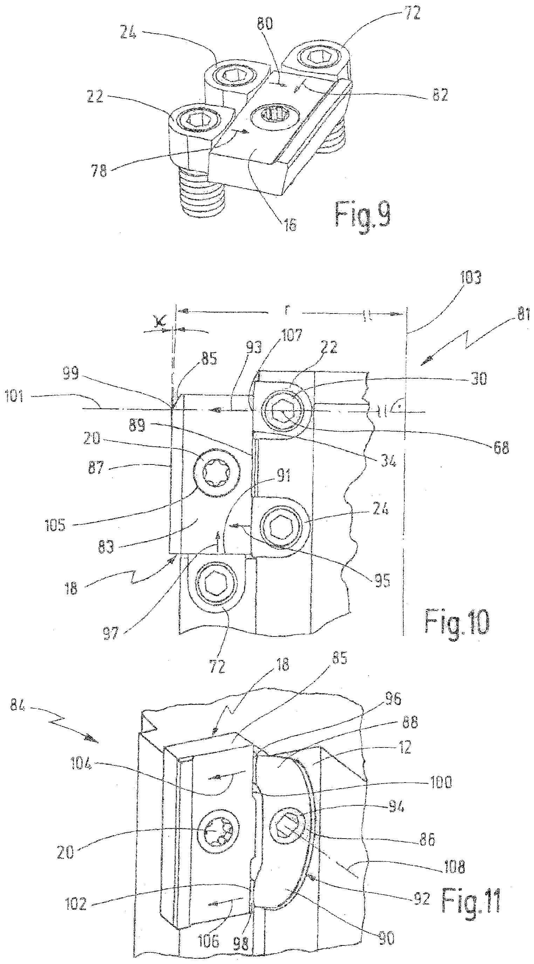

Die Fig. 9 zeigt eine Schneidplatte 16 mit den Widerlagern 22,24 und 72. Mittels der Widerlager 22,24 und 72 werden in die Schneidplatte 16 Verstellkräfte 78,80 und 82 eingeleitet. Durch Drehen der Differentialschrauben 30,32 und 74 lassen sich diese Verstellkräfte 78,80 und 82 präzise einstellen, um so kleinste Bewegungen der mittels der Schraube 20 am Plattensitz 18 festgelegte Schneidplatte hervorzurufen.

Die Fig. 10 zeigt einen Abschnitt eines dritten Maschinenwerkzeugs 81. Das Maschinenwerkzeug 81 hat einen Plattensitz mit einem als Schneidplatte 83 ausgebildeten Plattenelement. Die Schneidplatte 83 hat eine Hauptschneide 85 und eine Nebenschneide 87. Die Schneidplatte 83 ist wiederum mittels einer durch eine Bohrung 105 in der Schneidplatte 83 hindurch greifenden Schraube 20 am Plattensitz 18 festgelegt. Wie bei dem Maschinenwerkzeug 70 aus Fig. 8 sind an dem Plattensitz 18 des Maschinenwerkzeugs 81 ein erstes, ein zweites und ein drittes verstellbares Widerlager 22,24 und 72 vorgesehen. Sie wirken auf die seitliche Plattenfläche 89 bzw. 91 der Schneidplatte 83. Die Widerlager 22, 24 und 72 dienen dazu, Verstellkräfte 93,95 und 97 in die Schneidplatte 83 einzuleiten. Aufgrund dieser Verstellkräfte wird die Schneidplatte 83 am Plattensitz 18 bewegt, wobei die Schraube 20 als Festkörpergelenk wirkt.

Durch Justieren des verstellbaren Widerlagers 72 an dem Plattensitz 18 des Maschinenwerkzeugs 81 kann damit die Schneidplatte 83 so eingestellt werden, dass das Widerlager 22 mit einer Verstellkraft 93 auf die Schneidplatte 83 wirkt, die zu der Schneidecke 99 weist, welche zwischen der Hauptschneide 85 und der Nebenschneide 87 liegt. Bei dem Maschinenwerkzeug 81 wird dann über den Scheitel 107 der als Keilfläche ausgebildeten Lagerfläche 34 von Widerlager 22 bzw. der Achse 68 der Differentialschraube 30 für das erste Widerlager 22 und der Schneidecke 99 zwischen der Hauptschneide 85 und der Nebenschneide 87 eine Gerade 101 definiert, die exakt in einem rechten Winkel zur Drehachse 103 des Maschinenwerkzeugs 81 verläuft.

Die Anordnung der Widerlager 22, 24 und 72 ermöglicht bei dem Maschinenwerkzeug 81 ein besonders schnelles Einstellen von Flugkreisradius und Konizität:
Wenn nämlich das Widerlager 72 an dem Plattensitz 18 in einem ersten Schritt so justiert wurde, dass die mit dem Scheitel 107 der Lagerfläche 34 von Widerlager 22 und der Schneidecke 99 der Schneidplatte 83 definierte Gerade 101 senkrecht zur Drehachse 103 des Maschinenwerkzeugs 81 verläuft, kann in einem darauf folgenden Schritt durch Einstellen des Widerlagers 22 die radiale Position der Schneidkantenecke 99 und damit der Radius r des Flugkreises, d.h. der wirksame Durchmesser beim Maschinenwerkzeug 81 eingestellt werden. Durch anschließendes Justieren des verstellbaren Widerlagers 24 lässt sich dann der Konizitätswinkel *κ* der Schneidkante der Nebenschneide 87 in Bezug auf die Drehachse 103 des Maschinenwerkzeugs 81 festlegen.

Die angegebene Reihenfolge für das Einstellen der Widerlager 72, 22 und 24 ermöglicht, dass sich der Radius r des Flugkreises allein über das Widerlager 22 justieren lässt, und dass entsprechend der Konizitätswinkel *κ* bei dem Maschinenwerkzeug 81 durch Einstellen des Widerlagers 24 justiert werden kann, ohne dabei den Radius r des Flugkreises zu verändern.

Bei dem in Fig. 11 gezeigten Abschnitt eines vierten Maschinenwerkzeugs 84 mit einer an einem Plattensitz 18 aufgenommenen Schneidplatte 83 gibt es eine Verstelleinheit 86 mit einem ersten Widerlage 88 und einem zweiten Widerlager 90. Die Verstelleinheit 86 ist in einer am Grundkörper 12 gebildeten Linearführung 92 aufgenommen. In der Linearführung 92 kann die Verstelleinheit 86 mittels einer Differentialschraube 94 bewegt werden. Das erste Widerlager 88 und das zweite Widerlager 90 wirkt mit konvex gekrümmten Lagerflächen 96,98 auf ebene Plattenkantenflächen 100,102. Über die Widerlager 88 und 90 können Stellkräfte 104,106 in die Schneide der Schneidplatte 83 eingeleitet werden. Dies bewirkt wiederum eine Verstellung der Schneidplatte 83. Die Linearführung für die Verstelleinheit mit den Widerlagern 88 und 90 gewährleistet dabei, die Gegenkraft zu den Stellkräften 104,106 in den Grundkörper 12 des Maschinenwerkzeugs eingeleitet wird. Das hat zur Folge, dass die Differentialschraube 94 beim Verstellen nur auf Zug und Druck in Richtung ihrer Achse 108 beansprucht wird und keinen Biegemomenten ausgesetzt ist. Das ermöglicht wiederum, dass die Schneidplatte 83 bei festgelegter Befestigungsschraube 20 präzise am Plattensitz 18 durch Drehen der Differentialschraube 94 justiert werden kann.

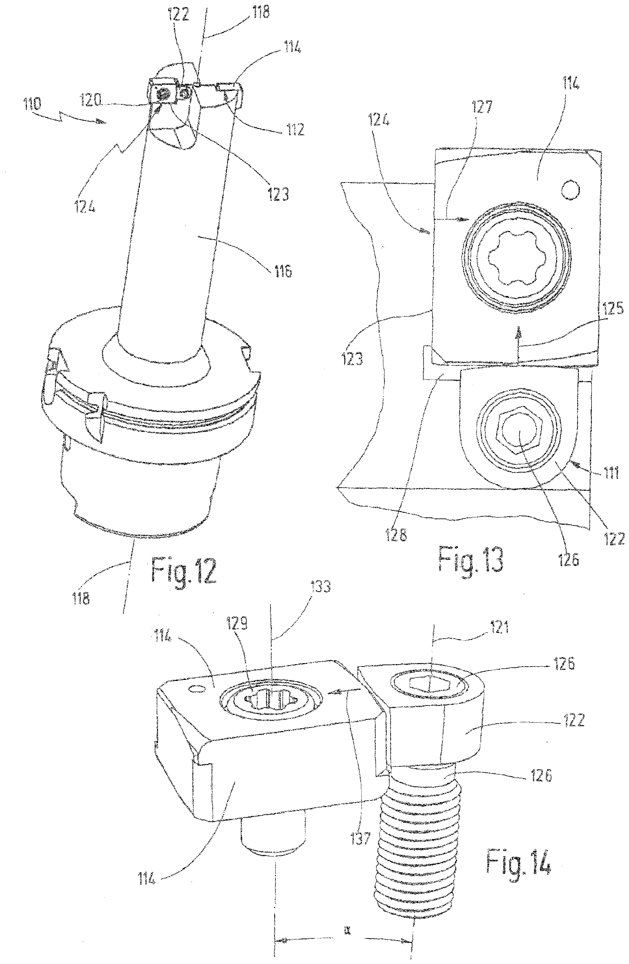

Mit dem in Fig. 12 gezeigten fünften Maschinenwerkzeug 110 können mit einem einzigen Bearbeitungsschnitt feinstbearbeitete Bohrungen in einem Werkstück hergestellt werden: Dieses Maschinenwerkzeug ermöglicht das Aufbohren und Feinbohren in einem Arbeitsgang. Bei dem Maschinenwerkzeug 110 sind zwei, in einem Plattensitz 112 angeordnete Schneidplatten 114 in einem Grundkörper 116 vorgesehen. Das Maschinenwerkzeug hat eine Drehachse 118. Eine jede Schneidplatte 114 ist mit einer die Schneidplatte durchsetzenden Befestigungsschraube 120 in ihrem Plattensitz 112 gegen dessen Bodenstützfläche festgelegt. Bei einem Maschinenwerkzeug 110 sind die Bodenstützfläche an einem Plattensitz und die Drehachse 118 parallel zueinander.

Die Fig. 13 zeigt in Seitenansicht die Abschnitte des Maschinenwerkzeugs 110 aus Fig. 12 mit im Plattensitz 112 angeordneten Schneidplatten 114. Am Plattensitz 112 befindet sich ein erstes verstellbares Widerlager 122 und ein durch eine Seitenkante 123 des Plattensitzes gebildetes unbewegliches Widerlager 124.

Das verstellbare Widerlager 122 ist identisch zu dem Widerlager 22 bei dem Maschinenwerkzeug 10 aus Fig. 1 ausgebildet. Für das verstellbare Widerlager 122 gibt es im Grundkörper 116 des Maschinenwerkzeugs 110 eine Linearführung 111. Das Widerlager 122 kann mittels einer Differentialschraube 126 gegenüber der Bodenstützfläche 128 des Plattensitzes 112 in der Linearführung 111 angehoben und abgesenkt werden. Über die Widerlager 122,124 werden in die Schneidplatte 114 Verstellkräfte 125 und 127 eingeleitet.

Die Fig. 14 zeigt die Schneidplatte 114 mit dem verstellbaren Widerlager 122 und der Differentialschraube 126. Das Gewinde für die Differentialschraube 126 im Grundkörper 116 des Maschinenwerkzeugs ist so ausgerichtet, dass die Achse 121 der Differentialschraube 126 mit leichter Neigung zur Bodenstützfläche des Plattensitzes verläuft: Die Achse 133 der Befestigungsschraube 129, die senkrecht ist zur Bodenstützfläche des Plattensitzes ist, und die Achse 121 der Differentialschraube 126 stehen hier in einem Winkel *α* zueinander. Vorzugsweise liegt der Winkel im Bereich 0° ≤ *α* ≤ 10°.

Die Linearführung 111 für das verstellbare Widerlager 122 im Grundkörper 116 des Maschinenwerkzeugs 110 ist mit einer Neigung gestaltet, die der Neigung der Differentialschraube entspricht. Damit werden durch die Linearführung Kraft- und Torsionsmomente abgefangen, die an dem Widerlager 122 auftreten, wenn Kräfte für die Justage der Schneidplatte 114 übertragen werden. Durch die Linearführung 111 werden diese Kräfte und Momente in den Grundkörper 116 des Maschinenwerkzeugs 110 eingeleitet. Dies hat zur Folge, dass die Differentialschraube 126 keinen Biegemomenten ausgesetzt ist. Die Differentialschraube 126 kann deshalb jederzeit präzise justiert werden.

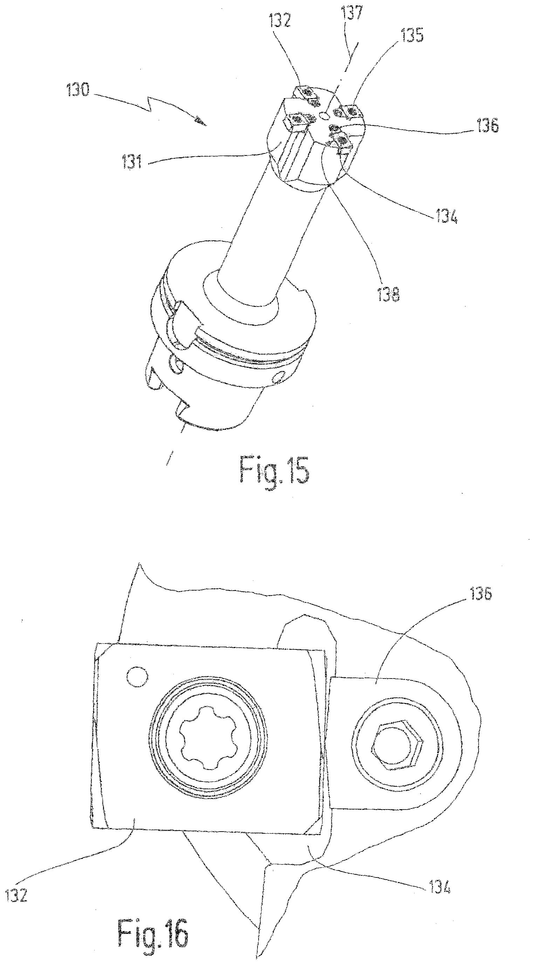

In Fig. 15 ist ein sechstes Maschinenwerkzeug 130 mit vier Plattenelementen 132 gezeigt, die als Wechselschneidplatten ausgebildet sind. Das Maschinenwerkzeug 130 hat eine Drehachse 137. Auch dieses Werkzeug eignet sich für das Aufbohren und Feinbohren in einem Arbeitsgang. Die Wechselschneidplatten 132 sind in einem Plattensitz 134 gegen die Bodenstützfläche mittels einer Schraube 135 an der Stirnseite eines Grundkörpers 131 des Maschinenwerkzeugs 130 gehalten. Die Bodenstützflächen an den Plattensitzen für die Wechselschneidplatten 132 sind bei dem Maschinenwerkzeug 130 senkrecht zu dessen Drehachse 137 ausgerichtet. Wie bei dem Maschinenwerkzeug 110 aus Fig. 10 ist bei dem Maschinenwerkzeug 130 für eine jede Schneidplatte 132 ein verstellbares Widerlager 136 und ein unbewegliches Widerlager 138 vorgesehen. Das verstellbare Widerlager 136 ist identisch zum Widerlager 22 am Maschinenwerkzeug 10 aus Fig. 1 ausgeführt. Das unbewegliche Widerlager 138 wird durch einen seitlichen Begrenzungsabschnitt des Plattensitzes 134 gebildet. Bei dieser Anordnung der Wechselschneidplatten lassen sich extrem große Zerspanungskräfte in den Grundkörper 131 des Maschinenwerkzeugs 130 einleiten. Das Maschinenwerkzeug 130 ermöglicht deshalb sehr große Schnitttiefen. Dabei sind die Wechselschneidplatten 132 und die Widerlager 136 sehr gut zugänglich.

Die Fig. 16 zeigt eine Frontansicht eines Abschnitts des Maschinenwerkzeugs 130 mit einer Schneidplatte 132 und dem beweglichen Widerlager 136.

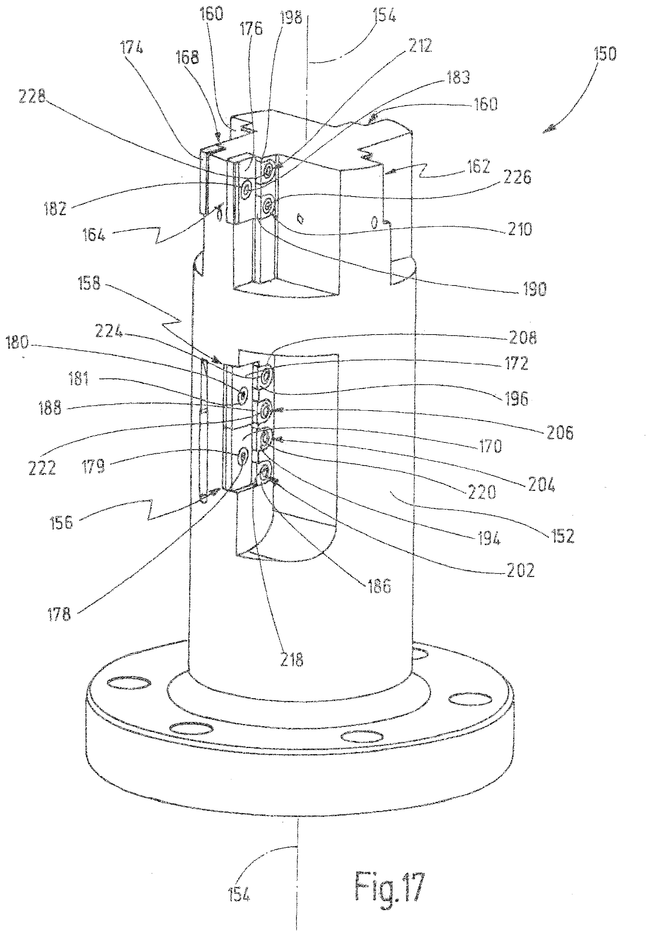

Die Fig. 17 zeigt ein als Reibwerkzeug ausgebildetes Maschinenwerkzeug 150. Das Maschinenwerkzeug 150 hat einen Grundkörper 152. Es kann durch Anschluss an eine Maschinenspindel einer nicht weiter dargestellten Werkzeugmaschine um die Drehachse 154 bewegt werden. An dem Grundkörper 152 des Maschinenwerkzeugs 150 gibt es Plattensitze 156,158,160,162,164,168. In den Plattensitzen 156,158 sind Plattenelemente in Form einer Schneidplatte 170 und einer Schneidplatte 172 angeordnet. Es sei bemerkt, dass die Plattenelemente 170, 172 auch als Führungsplatten ausgebildet sein können. In dem Plattensitz 168 gibt es ein als Führungsplatte 174 ausgebildetes Plattenelement. In dem Plattensitz 166 ist eine Schneidplatte 176 festgelegt.

Jedes Plattenelement 170,172,174,176 ist in seinem Plattensitz 156,158, 164, 168 mit einer durch eine Bohrung 179,181,183,185 im Plattenelement 170,172,174,176 hindurch greifende Schraube 178,180,182,184 am Grundkörper 152 des Maschinenwerkzeugs festgelegt. Dabei liegt das Plattenelement jeweils an der Bodenstützfläche 161 eines Plattensitzes 160 an. An den Plattensitzen 156,158,164,168 gibt es jeweils ein erstes verstellbares Widerlager 186,188,190,192 und ein zweites verstellbares Widerlager 194,196,198 sowie 200. Wie die Widerlager 22,24 bei dem Maschinenwerkzeug 10 aus Fig. 1 sind die Widerlager 186,188,190,192,194,196,198 jeweils in einer Linearführung 202,204,206, 208,210,212,214,216 am Grundkörper 152 des Maschinenwerkzeugs 150 mittels einer Differentialschraube 218, 220, 222, 224, 226, 228, 230, 232 gehalten. Die Plattenelemente 170,172, 174, 176 liegen mit einer seitlichen Plattenfläche an Lagerflächen 193,201 eines Widerlagers 192,200 an. Mit der Differentialschraube 218, 220, 222, 224, 226, 228, 230, 232 können die Widerlager 186, 188, 190, 192, 194, 196, 198 verstellt werden.

Durch Einstellen der Widerlager 186,188,190,192,194,196,198 und 200 wird die entsprechende Befestigungsschraube 178,180,182,184 für diese Plattenelemente 170,172,174,176 verformt. Dies ermöglicht das Justieren von Position und Ausrichtung der Schneidkante 234, der Schneidplatten 170,172,174 und der Führungskante 236 der Führungsplatte 176 relativ zu der Drehachse 154 bei dem Maschinenwerkzeug 150. Dabei nehmen die Linearführungen 202,204,206,208,210,212,214,216 Kraft- und Torsionsmomente auf, die aufgrund von Verstellkräften für die Plattenelemente an den Widerlagern 186,188,190,192,194,196,198 auftreten. Die Kraft- und Torsionsmomente an den Widerlagern 186,188,190 etc. werden mittels der Linearführungen 202,204,206 etc. in den Grundkörper 152 des Maschinenwerkzeugs 150 eingeleitet.

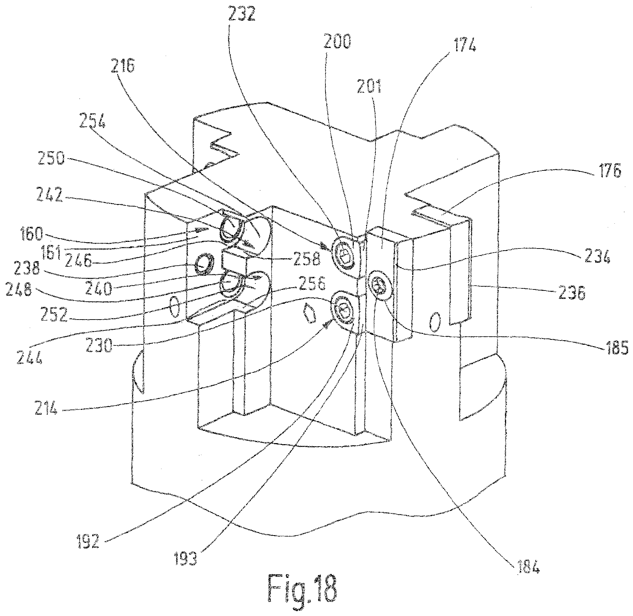

Die Fig. 18 zeigt einen Plattensitz 160 des Maschinenwerkzeugs ohne ein Plattenelement und ohne verstellbare Widerlager. In dem Plattensitz 160 gibt es, so wie in den weiteren Plattensitzen 156,158, 164,168, die in Fig. 17 zu sehen sind, eine Gewindebohrung 238. Diese Gewindebohrung 238 ist für die Aufnahme einer durch eine Bohrung in einem Plattenelement hindurch greifenden Befestigungsschraube ausgelegt. Die Befestigungsschraube dient zum Festlegen eines Plattenelements an dem Plattensitz 160. An dem Plattensitz 160 ist eine Linearführung 240 für ein erstes verstellbares Widerlager und eine Linearführung 242 für ein zweites verstellbares Widerlager ausgebildet. Diese Widerlager haben bevorzugt eine Geometrie, wie sie anhand von Fig. 4a und 4b erläutert ist. In den Linearführungen 240,242 gibt es jeweils einen Bodenabschnitt 244,246 mit einer Gewindebohrung 248,250 zur Aufnahme einer Differentialschraube. Eine bevorzugte Ausführungsform einer geeigneten Differentialschraube ist in Fig. 5 gezeigt.

Eine jede Linearführung 240,242 hat einen gekrümmten Abschnitt 252,254, der auf der einen Seite jeweils in einen ersten geraden flächigen Abschnitt 256 und auf der anderen Seite in einen zweiten geraden flächigen Abschnitt 258 übergeht. Die gekrümmten Abschnitte 252,254 dienen zur Aufnahme der kreisbogenförmig gekrümmten Führungsabschnitte 60 eines Widerlagers für ein Plattenelement, wie es in den Fig. 4a und Fig. 4b gezeigt ist. Die geraden Abschnitte 256,258 einer Linearführung 240,242 schließen sich an die entsprechend gekrümmten Abschnitte 252,254 der Linearführungen 240,242 an. Sie sind für das Zusammenwirken mit einem Tangentenflächenabschnitt 58 eines in den Fig. 4a und Fig. 4b gezeigten Widerlagers ausgelegt. Die beschriebene Geometrie der Linearführungen 240,242 gewährleistet ein verklemmungsfreies Führen von entsprechenden Widerlagern, auch wenn diese zum Einstellen eines Plattenelements mit sehr hohen Kräften beaufschlagt werden.

Bei den beschriebenen Maschinenwerkzeugen 10,70,81,84,110,130,150 ist insbesondere eine zeitsparende und damit wirtschaftliche Einstellung eines Plattenelements möglich, das z.B. als Schneidplatte 16,83,114 bzw. 132 oder als Führungsplatte 174 ausgebildet sein kann. Hierzu wird zunächst ein Plattenelement 16,83,85,114 bzw. 132,174 in seinem Plattensitz 18,112,134,168 unter Verstellen eines Widerlagers 22, 24, 72, 88, 90, 122, 136, 192, 198 auf ein Untermaß justiert. Im Anschluss daran wird das Plattenelement 16,85,114,132,174 am Plattensitz 18,112, bzw. 134,174 im Grundkörper 12,116,131,152 mittels der durch die Bohrung 42,105,185 in dem Plattenelement 16,83,85,114 bzw. 132,174 hindurch greifenden Schraube 20,184 unter Verwendung eines Drehmomentschlüssels festgelegt. In einem dritten Schritt erfolgt dann ein Nachstellen des Plattenelements 16,83,85,114 bzw. 132,174 bei Festlegung am Plattensitz 18,112 bzw. 132,174 unter gleichzeitiger Vermessung der Platteneinstellung am Maschinenwerkzeug 10,70,81,84,110,130,150 auf ein Sollmaß, indem das für das Plattenelement 16,83,85,114 bzw. 132,174 vorgesehene verstellbare Widerlager 22,24,72,88,90,122,136,192,198 eingestellt wird. Die beschriebenen Maschinenwerkzeuge eignen sich insbesondere auch für eine Werkstückbearbeitung, bei der ein rotierendes Werkstück um die Werkzeugachse des Maschinenwerkzeugs bewegt wird.

Zusammenfassend ist folgendes festzuhalten: Die Erfindung bezieht sich auf ein Maschinenwerkzeug 10 mit einem Grundkörper 12. An dem Grundkörper 12 gibt es einen Plattensitz 18 mit einem darin angeordneten Plattenelement 16, das z.B. als Schneidplatte oder als Führungsplatte ausgebildet sein kann. Das Plattenelement 16 hat wenigstens eine Plattenkante 38, welche über den Plattensitz 18 frei nach außen übersteht und gegen eine Bodenstützfläche 26 des Plattensitzes 18 anliegt. Das Plattenelement 16 ist mittels einer durch eine Bohrung 42 in dem Plattenelement 16 hindurch greifenden Schraube 20 am Plattensitz 18 festlegbar. An dem Plattensitz 18 ist ein erstes Widerlager 22 für das Plattenelement 16 vorgesehen, das eine Lagerfläche 34 hat, an welchem das Plattenelement 16 mit einer seitliche Plattenfläche 40 kraftschlüssig anliegt. An den Plattensitz 18 ist ein weiteres Widerlager 24 für das kraftschlüssige Anliegen einer seitlichen Plattenfläche 40 des Plattenelements 16 ausgebildet. Zur Einstellung der Plattenkante 38 des Plattenelements 16 ist dem ersten Widerlager 22 eine Verstelleinrichtung 30 zugeordnet, die in Bezug auf die Bodenstützfläche 26 des Plattensitzes 18 ein Anheben und Absenken des Widerlagers 22 ermöglicht. Für das erste Widerlager 22 ist dabei eine Linearführung 50 vorgesehen, die bei der Einstellung des Plattenelements 16 auftretende Kräfte und Momente aufnimmt und in den Grundkörper 12 des Maschinenwerkzeugs 10 einleitet.

## Patentansprüche

1. Maschinenwerkzeug,
mit einem Grundkörper (12, 116, 131, 152),
mit mindestens einem in einem Plattensitz (18, 112, 134, 156, 158, 160, 162, 164, 168) am Grundkörper (12, 116, 131, 152) angeordneten Plattenelement (16, 83, 114, 132, 170, 172 174, 176),
das wenigstens eine Plattenkante (38, 234, 236) aufweist, welches über den Plattensitz (18, 112, 134, 156, 158, 160, 162, 164, 168) frei nach außen übersteht und gegen eine Bodenstützfläche (26, 128, 161) des Plattensitzes (18, 112, 134, 156, 158, 160, 162, 164, 168) anliegt, und das mittels einer durch eine Bohrung (42, 105, 179, 181, 183, 185) in dem Plattenelement (16, 83, 114, 132, 170, 174, 176) hindurch greifenden Schraube (20, 120, 129, 135, 178, 180, 182, 184) am Plattensitz (18, 112, 134, 156, 158, 160, 162, 164, 168) festlegbar ist,
bei dem für das Plattenelement (16, 83, 114, 132, 170, 172, 174, 176) an dem Plattensitz (18, 112, 134, 156, 158, 160, 162, 164, 168) wenigstens ein verstellbares Widerlager (22, 61, 88, 122, 136, 186, 188, 190, 192) vorgesehen ist, das eine Lagerfläche (34, 69, 96, 98, 193) hat, an welcher das Plattenelement (16, 83, 114, 132, 170, 172 174, 176) mit einer seitlichen Plattenfläche (40, 89, 100) kraftschlüssig anliegt, und das eine ebene Außenabschnittsfläche (58) und eine gekrümmte Außenabschnittsfläche (60) aufweist,
wobei das verstellbare Widerlager (22, 61, 88, 122, 136, 186, 188, 190, 192) in einer Linearführung (50, 111, 202, 206, 210, 240) geführt ist, die einen kreisbogenförmig gekrümmten Führungsabschnitt (55) und einen als Planfläche gestalteten Führungsabschnitt (57, 59) hat,
bei dem an dem Plattensitz (18, 112, 134, 156, 158, 160, 162, 164, 168) ein weiteres Widerlager (24, 90, 124, 138, 194, 196, 198, 200) mit einer Lagerfläche (36, 98, 201) für das kraftschlüssige Anliegen einer seitlichen Plattenfläche (40) des Plattenelements (16, 83, 114, 132, 170, 172, 174, 176) ausgebildet ist,
wobei zur Einstellung der Plattenkante (38, 234, 236) des Plattenelements (16, 83, 114, 132, 170, 172, 174, 176) dem verstellbaren Widerlager (22, 61, 88, 122, 136, 186, 188, 190, 192) eine Verstelleinrichtung (30, 230, 232) zugeordnet ist, die in Bezug auf die Bodenstützfläche (26, 128, 161) des Plattensitzes (18, 112, 134, 156, 158, 160, 162, 164, 168) ein Anheben und Absenken dieses Widerlagers (22, 61, 88, 122, 136, 186, 188, 190, 192) ermöglicht, und
wobei die gekrümmte Außenabschnittsfläche (60) des verstellbaren Widerlagers (22, 61, 88, 122, 136, 186, 188, 190, 192) mit geringem Spiel an dem kreisbogenförmig gekrümmten Führungsabschnitt (55) und die ebene Außenabschnittsfläche (58) des verstellbaren Widerlagers (22, 61, 88, 122, 136, 186, 188, 190, 192) an dem als Planfläche gestalteten Führungsabschnitt (57, 59) der Linearführung (50, 111, 202, 206, 210, 240) liegt, um die bei der Einstellung des Plattenelements (16, 83, 114, 132, 170, 172, 174, 176) an diesem Widerlager (22, 61, 88, 122, 136, 186, 188, 190, 192) auftretenden Kräfte und Momente aufzunehmen und in den Grundkörper (12, 116, 131, 152) einzuleiten,
**dadurch gekennzeichnet, dass**
die Lagerfläche (34) des verstellbaren Widerlagers (22, 61, 88, 122, 136, 186, 188, 190, 192) oder die seitliche Plattenfläche (40) des Plattenelements (16, 83, 114, 132, 170, 172, 174, 176) in einer zu der Bodenstützfläche (26, 128, 161) des Plattensitzes (18, 112, 134, 156, 158, 160, 162, 164, 168) parallelen Ebene konvex gekrümmt oder in Form von sich segmentförmig aneinanderreihenden Flächenabschnitten (71) prismatisch gekrümmt ist.

2. Maschinenwerkzeug nach Anspruch 1, **dadurch gekennzeichnet, dass** das verstellbare Widerlager (22) eine Lagerfläche (34) hat, die zu der Bodenstützfläche (26,161) des Plattensitzes (18,160,162) geneigt ist.

3. Maschinenwerkzeug nach Anspruch 1 oder 2, **dadurch gekennzeichnet, dass** auch das weitere Widerlager (24) verstellbar ist und eine Lagerfläche (36) hat, die an einer seitlichen Plattenfläche (40) des Plattenelements (16, 174, 176) anliegt, und das in Bezug auf die Bodenstützfläche (26) des Plattensitzes (18) angehoben und abgesenkt werden kann.

4. Maschinenwerkzeug nach Anspruch 3, **dadurch gekennzeichnet, dass** für das weitere Widerlager (24) eine Linearführung (54) vorgesehen ist, die bei der Einstellung des Plattenelements (16) auftretende Kräfte und Momente aufnimmt und in den Grundkörper (12) des Maschinenwerkzeugs (10) einleitet.

5. Maschinenwerkzeug nach einem der Ansprüche 1 bis 4, **dadurch gekennzeichnet, dass** an dem Plattensitz (18) ein drittes Widerlager (72) für das Plattenelement (16) vorgesehen ist, das eine Lagerfläche (41) hat, an welcher das Plattenelement (16) mit einer seitlichen Plattenfläche (45) kraftschlüssig anliegt.

6. Maschinenwerkzeug nach Anspruch 5, **dadurch gekennzeichnet, dass** wenigstens die Lagerfläche (41) des dritten Widerlagers (72) oder die seitliche Plattenfläche (45) gekrümmt ist, insbesondere konvex gekrümmt ist oder prismatisch gekrümmt ist, und/oder dass das dritte Widerlager (72) verstellbar ist und im Bezug auf die Bodenstützfläche (26) des Plattensitzes (18) angehoben und abgesenkt werden kann.

7. Maschinenwerkzeug nach Anspruch 6, **dadurch gekennzeichnet, dass** für das dritte Widerlager (72) eine Linearführung (75) vorgesehen ist, die bei der Einstellung des Plattenelements (18) an dem dritten Widerlager (72) auftretende Kräfte und Momente aufnimmt und in den Grundkörper (12) des Maschinenwerkzeugs (10) einleitet.

8. Maschinenwerkzeug nach einem der Ansprüche 5 bis 7, **dadurch gekennzeichnet, dass** als drittes Widerlager (72) ein Verstellkeil mit einer relativ zu der Bodenstützfläche (26) des Plattensitzes (18) geneigten Keilfläche (34) vorgesehen ist.

9. Maschinenwerkzeug nach einem der Ansprüche 4 bis 8, **dadurch gekennzeichnet, dass** als weiteres Widerlager (22,24,72) ein Verstellkeil mit einer relativ zu der Bodenstützfläche (26) des Plattensitzes (18) geneigten Keilfläche (34) vorgesehen ist.

10. Maschinenwerkzeug nach Anspruch 8 oder 9, **dadurch gekennzeichnet, dass** die Keilfläche gekrümmt ist, insbesondere prismatisch gekrümmt ist, oder dass die Keilfläche (34) in einer ersten Richtung (44) und in einer von der ersten Richtung (44) verschiedenen zweiten Richtung (46) gekrümmt ist.

11. Maschinenwerkzeug nach einem der Ansprüche 1 bis 10, **dadurch gekennzeichnet, dass** als Verstelleinrichtung für das verstellbare Widerlager (22, 24, 72) eine an dem Widerlager (22,24,72) und in dem Grundkörper (12,116) geführte Differentialschraube (30,32,74,126) vorgesehen ist.

12. Maschinenwerkzeug nach Anspruch 11, **dadurch gekennzeichnet, dass** das verstellbare Widerlager (22) eine gekrümmte Lagerfläche (34) mit einem Scheitelpunkt (43) hat, wobei die Linearführung (50) einen kreisbogenförmig gekrümmten Führungsabschnitt (55,252,254) hat, wobei die Achse (68) der Differentialschraube (30) im Zentrum dieses kreisbogenförmig gekrümmten Führungsabschnitts liegt, und wobei der Krümmungsradius der Lagerfläche (34) im Scheitelpunkt (43) nicht größer ist als der 14-fache Abstand des Scheitelpunkts (43) von der Achse (68) der Differentialschraube (30), und/oder dass die Achse (121) der Differentialschraube (126) relativ zu der Bodenstützfläche für das Plattenelement (114) am Plattensitz (112) geneigt ist.

13. Maschinenwerkzeug nach einem der Ansprüche 1 bis 12, **dadurch gekennzeichnet, dass** das Plattenelement (83) eine einen Durchmesser erzeugende Plattendecke (99) hat, wobei das wenigstens eine verstellbare Widerlager (22) mit der dem verstellbaren Widerlager (22) zugeordneten Verstelleinrichtung (30) derart an dem Plattensitz (18) angeordnet ist, dass die durch Verstellen des Widerlagers (22) mit der Verstelleinrichtung (30) in das Plattenelement (83) eingeleitete Verstellkraft (93) zu der Plattenecke (99) gerichtet verläuft.

14. Maschinenwerkzeug nach einem der Ansprüche 1 bis 13, **dadurch gekennzeichnet, dass** das Plattenelement (16) mit einer gemeinsamen seitlichen Plattenfläche (40) an dem verstellbaren Widerlager (22) und dem weiteren Widerlager (24) anliegt, oder dass das Plattenelement (16) mit verschiedenen seitlichen Plattenflächen (40,45) an dem verstellbaren Widerlager (22) und dem weiteren Widerlager (72) anliegt.

15. Maschinenwerkzeug nach einem der Ansprüche 1 bis 14, **dadurch gekennzeichnet, dass** das Plattenelement eine Schneidplatte (16,83,114,132,176) oder eine Führungsplatte (170,172,174) ist.

16. Verwendung eines Maschinenwerkzeugs nach einem der Ansprüche 1 bis 15 als Reibwerkzeug (10), als Bohrwerkzeug (110), insbesondere als Aufbohr- und/oder Feinbohrwerkzeug (130), oder als Fräswerkzeug für das Bearbeiten eines Werkstücks in einer Werkzeugmaschine, in der das Maschinenwerkzeug um eine Werkzeugachse (14,154) gegenüber dem Werkstück oder das Werkstück gegenüber dem Maschinenwerkzeug rotierend bewegt wird.

17. Verfahren zum Einstellen eines gemäß einem der Ansprüche 1 bis 15 ausgebildeten Maschinenwerkzeugs (10) mit folgenden Schritten:
i. Vorpositionieren eines Plattenelements (16,176) im Plattensitz (18,162) durch Verstellen wenigstens eines Widerlagers (22,192) auf ein Untermaß;
ii. definiertes Festlegen des Plattenelements (16,176) im Plattensitz (18,162) am Grundkörper (12,152) mittels der durch eine Bohrung (42,185) in dem Plattenelement (16,176) hindurch greifenden Schraube (20,184);
iii. Nachstellen des wenigstens einen Widerlagers (22,192) unter gleichzeitiger Vermessung der Einstellung des Plattenelements (16,176) auf ein Sollmaß.

## Claims

1. Machine tool, having a base body (12, 116, 131, 152), with at least one plate member (16, 83, 114, 132, 170, 172 174, 176) arranged in a plate seat (18, 112, 134, 156, 158, 160, 162, 164, 168) on the base body (12, 116, 131, 152), wherein said plate element has at least one plate edge (38, 234, 236) protruding freely outwardly over the plate seat (18, 112, 134, 156, 158, 160, 162, 164, 168) and abutting against a bottom support surface (26, 128, 161) of the plate seat (18, 112, 134, 156, 158, 160, 162, 164, 168), and which can be fixed by means of a screw (20, 120, 129, 135, 178, 180, 182, 184) reaching through a bore (42, 105, 179, 181, 183, 185) in the plate member (16, 83, 114, 132, 170, 174, 176) to the insert seat (18, 112, 134, 156, 158, 160, 162, 164, 168), in which, for the plate member (16, 83, 114, 132, 170, 172, 174, 176) on the plate seat (18, 112, 134, 156, 158, 160, 162, 164, 168), at least one adjustable abutment (22, 61, 88, 122, 136, 186, 188, 190, 192) is provided which has a bearing surface (34, 69, 96, 98, 193) on which the plate member (16, 83, 114, 132, 170, 172, 174, 176) frictionally rests with a lateral plate surface (40, 89, 100), and which has a flat outer portion surface (58) and a curved outer portion surface (60), wherein the adjustable abutment (22, 61, 88, 122, 136, 186, 188, 190, 192) is guided in a linear guide (50, 111, 202, 206, 210, 240), which has a circular arcuate guide portion (55) and a guide surface designed as a flat portion (57, 59), in which, on the plate seat (18, 112, 134, 156, 158, 160, 162, 164, 168) a further adjustable abutment (24, 90, 124, 138, 194, 196, 198, 200) having a bearing surface (36, 98, 201) for the frictional abutment a lateral plate surface (40) of the plate member (16, 83, 114, 132, 170, 172, 174, 176) is formed, wherein for setting of the plate edge (38, 234, 236) of the plate member (16, 83, 114, 132, 170, 172, 174, 176) an adjusting device (30, 230, 232) is associated with the adjustable abutment (22, 61, 88, 122, 136, 186, 188, 190, 192), wherein the adjusting device, which, with respect to the bottom support surface (26, 128, 161) of the plate seat (18, 112, 134, 156, 158, 160, 162, 164, 168), allows a raising and lowering of this abutment (22, 61, 88, 122, 136, 186, 188, 190, 192), and wherein the curved outer portion surface (60) of the adjustable abutment (22, 61, 88, 122, 136, 186, 188, 190, 192) is located with little play on the arcuate curved guide portion (55) and the planar outer section surface (58) of the adjustable abutment (22, 61, 88, 122, 136, 186, 188, 190, 192) lies on the guide surface (57, 59) of the linear guide (50, 111, 202, 206, 210, 240) configured as a flat surface, in order to compensate the forces and moments occurring on this abutment (22, 61, 88, 122, 136, 186, 188, 190, 192) during the setting of the plate member (16, 83, 114, 132, 170, 172, 174, 176) and to introduce them into the base body (12, 116, 131, 152), **characterized in that** the bearing surface (34) of the adjustable abutment (22, 61, 88, 122, 136, 186, 188, 190, 192) or the lateral plate surface (40) of the plate member (16, 83, 114, 132, 170, 172, 174, 176) is convexly curved in a plane parallel to the bottom support surface (26, 128, 161) of the plate seat (18, 112, 134, 156, 158, 160, 162, 164, 168) or is prismatically curved in the form of surface portions (71) juxtaposed in a segment shaped manner.

2. Machine tool according to claim 1, **characterized in that** the adjustable abutment (22) has a bearing surface (34) inclined to the bottom support surface (26, 161) of the plate seat (18, 160, 162).

3. Machine tool according to claim 1 or 2, **characterized in that** the further abutment (24) is also adjustable and has a bearing surface (36) which abuts against a lateral plate surface (40) of the plate member (16, 174, 176), and which can be raised and lowered with respect to the bottom support surface (26) of the plate seat (18).

4. Machine tool according to claim 3, **characterized in that** for the further abutment (24) a linear guide (54) is provided, which absorbs forces and moments occurring during the setting of the plate member (16) and introduces them into the base body (12) of the machine tool (10).

5. Machine tool according to any of claims 1 to 4, **characterized in that** on the plate seat (18) a third abutment (72) is provided for the plate member (16), which has a bearing surface (41) on which the plate member (16) frictionally abuts with a lateral plate surface (45).

6. Machine tool according to claim 5, **characterized in that** at least the bearing surface (41) of the third abutment (72) or the lateral plate surface (45) is curved, in particular convexly curved or prismatically curved, and/or that the third abutment (72) is adjustable and can be raised and lowered with respect to the bottom support surface (26) of the plate seat (18).

7. Machine tool according to claim 6, **characterized in that** for the third abutment (72), a linear guide (75) is provided, which absorbs forces and moments occurring during the setting of the plate member (18) on the third abutment (72) and introduces them into the base body (12) of the machine tool (10).

8. Machine tool according to any of claims 5 to 7, **characterized in that** an adjusting wedge with an inclined wedge surface (34) relative to the bottom support surface (26) of the plate seat (18) is provided as the third abutment (72).

9. Machine tool according to any of claims 4 to 8, **characterized in that** as an additional abutment (22, 24, 72) an adjusting wedge with an inclined wedge surface (34) is provided relative to the bottom support surface (26) of the plate seat (18).

10. Machine tool according to claim 8 or 9, **characterized in that** the wedge surface is curved, in particular prismatically curved, or that the wedge surface (34) is curved in a first direction (44) and in a direction (46) different from the first direction (44).

11. Machine tool according to any of claims 1 to 10, **characterized in that** as an adjusting device for the adjustable abutment (22, 24, 72), a differential screw (30, 32, 74, 126) guided on the abutment (22, 24, 72) and in the base body (12, 116) is provided.

12. Machine tool according to claim 11, **characterized in that** the adjustable abutment (22) has a curved bearing surface (34) with a vertex (43), wherein the linear guide (50) has a circular arcuate guide portion (55, 252, 254), wherein the axis (68) of the differential screw (30) is located in the center of this circular arcuate guide portion, and wherein the radius of curvature of the bearing surface (34) at the vertex (43) is not greater than 14 times the distance of the vertex (43) from the axis (68) of the differential screw (30), and/or that the axis (121) of the differential screw (126) is inclined relative to the bottom support surface for the plate member (114) on the plate seat (112).

13. Machine tool according to any of claims 1 to 12, **characterized in that** the plate member (83) has a diameter-producing plate cover (99), wherein the at least one adjustable abutment (22) is arranged, with the adjusting device (30) associated with adjustable abutment (22), on the plate seat (18) such that by displacing of the abutment (22) with the adjusting device (30), adjusting force (93) introduced in the plate member (83) extends in the direction of the plate corner (99).

14. Machine tool according to any of claims 1 to 13, **characterized in that** the plate member (16) abuts against the adjustable abutment (22) and the further abutment (24) with a common lateral plate surface (40), or that the plate member (16) with different lateral plate surfaces (40, 45) abuts against the adjustable abutment (22) and the further abutment (72).

15. Machine tool according to any of claims 1 to 14, **characterized in that** the plate member is a cutting plate (16, 83, 114, 132, 176) or a guide plate (170, 172, 174).

16. Use of a machine tool according to one of claims 1 to 15 as a reaming tool (10), as a drilling tool (110), in particular as a boring and/or fine boring tool (130), or as a milling tool for processing a workpiece in a machine tool, in which the machine tool is rotated about a tool axis (14, 154) relative to the workpiece or the workpiece is rotated relative to the machine tool.

17. A method for adjusting a machine tool (10) formed according to one of claims 1 to 15, comprising the following steps:
i. pre-positioning a plate member (16, 176) in the plate seat (18, 162) by displacing at least one abutment (22, 192) to an undersize;
ii. defined fixing of the plate member (16, 176) in the plate seat (18, 162) on the base body (12, 152) by means of the screw (20, 184) passing through a bore (42, 185) in the plate member (16, 176);
iii. resetting of the at least one abutment (22, 192) while simultaneously measuring the setting of the plate element (16, 176) to a specified dimension.

## Revendications

1. Machine-outil
comportant un corps de base (12, 116, 131, 152),
comportant au moins un élément de plaque (16, 83, 114, 132, 170, 172, 174, 176) disposé sur une assise de plaque (18, 112, 134, 156, 158, 160, 162, 164, 168) sur le corps de base (12, 116, 131, 152),
l'élément de plaque présentant au moins un bord de plaque (38, 234, 236) qui fait librement saillie vers l'extérieur au-delà de l'assise de plaque (18, 112, 134, 156, 158, 160, 162, 164, 168) et repose contre une surface d'appui de fond (26, 128, 161) de l'assise de plaque (18, 112, 134, 156, 158, 160, 162, 164, 168), et pouvant être fixé à l'assise de plaque (18, 112, 134, 156, 158, 160, 162, 164, 168) au moyen d'une vis (20, 120, 129, 135, 178, 180, 182, 184) traversant un alésage (42, 105, 179, 181, 183, 185) dans l'élément de plaque (16, 83, 114, 132, 170, 174, 176),
au moins une butée réglable (22, 61, 88, 122, 136, 186, 188, 190, 192) étant prévue sur l'assise de plaque (18, 112, 134, 156, 158, 160, 162, 164, 168) pour l'élément de plaque (16, 83, 114, 132, 170, 172, 174, 176), laquelle butée présente une surface d'appui (34, 69, 96, 98, 193), contre laquelle l'élément de plaque (16, 83, 114, 132, 170, 172, 174, 176) repose par liaison de force avec une surface latérale de la plaque (40, 89, 100), et présentant une surface de section extérieur plate (58) et une surface de section extérieure incurvée (60),
la butée réglable (22, 61, 88, 122, 136, 186, 188, 190, 192) étant guidée dans un système de guidage linéaire (50, 111, 202, 206, 210, 240) qui présente une section de guidage (55) incurvée en arc de cercle et une section de guidage (57, 59) conçue sous la forme d'une surface plane,
une butée supplémentaire (24, 90, 124, 138, 194, 196, 198, 200) étant réalisée sur l'assise de plaque (18, 112, 134, 156, 158, 160, 162, 164, 168) avec une surface d'appui (36, 98, 201) pour permettre à une surface latérale de la plaque (40) de l'élément de plaque (16, 83, 114, 132, 170, 172, 174, 176) de reposer par liaison de force,
un dispositif de réglage (30, 230, 232) étant associé à la butée réglable (22, 61, 88, 122, 136, 186, 188, 190, 192) pour le réglage du bord de plaque (38, 234, 236) de l'élément de plaque (16, 83, 114, 132, 170, 172, 174, 176), ledit dispositif permettant de relever et d'abaisser cette butée (22, 61, 88, 122, 136, 186, 188, 190, 192) par rapport à la surface d'appui de fond (26, 128, 161) de l'assise de plaque (18, 112, 134, 156, 158, 160, 162, 164, 168), et
la surface de section extérieure incurvée (60) de la butée réglable (22, 61, 88, 122, 136, 186, 188, 190, 192) s'appuyant avec un faible jeu sur la section de guidage incurvée en arc de cercle (55) et la surface de section extérieure plate (58) de la butée réglable (22, 61, 88, 122, 136, 186, 188, 190, 192) reposant sur la section de guidage (57, 59) du système de guidage linéaire (50, 111, 202, 206, 210, 240) conçu sous la forme d'une surface plane de façon à absorber les forces et les couples se produisant sur cette butée (22, 61, 88, 122, 136, 186, 188, 190, 192) pendant le réglage de l'élément en plaque (16, 83, 114, 132, 170, 172, 174, 176) et à les introduire dans le corps de base (12, 116, 131, 152),
**caractérisée en ce que**
la surface d'appui (34) de la butée réglable (22, 61, 88, 122, 136, 186, 188, 190, 192) ou la surface latérale de la plaque (40) de l'élément de plaque (16, 83, 114, 132, 170, 172, 174, 176) est incurvée de manière convexe dans un plan parallèle à la surface d'appui de fond (26, 128, 161) de l'assise de plaque (18, 112, 134, 156, 158, 160, 162, 164, 168) ou est incurvée de manière prismatique sous la forme de sections de surface (71) disposées en une succession en forme de segment.

2. Machine-outil selon la revendication 1, **caractérisée en ce que** la butée réglable (22) présente une surface d'appui (34) inclinée par rapport à la surface d'appui de fond (26, 161) de l'assise de plaque (18, 160, 162).

3. Machine-outil selon la revendication 1 ou 2, **caractérisée en ce que** la butée supplémentaire (24) est également réglable et présente une surface d'appui (36) qui repose sur une surface latérale de la plaque (40) de l'élément de plaque (16, 174, 176), et qui peut être soulevée et abaissée par rapport à la surface d'appui de fond (26) de l'assise de plaque (18).

4. Machine-outil selon la revendication 3, **caractérisée en ce qu'**un système de guidage linéaire (54) est prévu pour la butée supplémentaire (24), lequel système de guidage linéaire absorbe les forces et les couples se produisant pendant le réglage de l'élément de plaque (16), et les introduit dans le corps de base (12) de la machine-outil (10).

5. Machine-outil selon l'une des revendications 1 à 4, **caractérisée en ce qu'**une troisième butée (72) pour l'élément de plaque (16) est prévue sur l'assise de plaque (18), laquelle butée présente une surface d'appui (41) contre laquelle l'élément de plaque (16) repose par liaison de force avec une surface latérale de la plaque (45).

6. Machine-outil selon la revendication 5, **caractérisée en ce qu'**au moins la surface d'appui (41) de la troisième butée (72) ou la surface latérale de la plaque (45) est incurvée, en particulier de manière convexe ou prismatique, et/ou **en ce que** la troisième butée (72) est réglable et peut être soulevée et abaissée par rapport à la surface d'appui de fond (26) de l'assise de plaque (18).

7. Machine-outil selon la revendication 6, **caractérisée en ce qu'**un système de guidage linéaire (75) est prévu pour la troisième butée (72), lequel système de guidage linéaire absorbe les forces et les couples se produisant sur la troisième butée (72) pendant le réglage de l'élément de plaque (18), et les introduit dans le corps de base (12) de la machine-outil (10).

8. Machine-outil selon l'une des revendications 5 à 7, **caractérisée en ce que,** comme troisième butée (72), un coin de réglage est prévu, ayant une surface en coin (34) inclinée par rapport à la surface d'appui de fond (26) de l'assise de plaque (18).

9. Machine-outil selon l'une des revendications 4 à 8, **caractérisée en ce que,** comme butée supplémentaire (22, 24, 72), un coin de réglage est prévu, ayant une surface en coin (34) inclinée par rapport à la surface d'appui de fond (26) de l'assise de plaque (18).

10. Machine-outil selon la revendication 8 ou 9, **caractérisée en ce que** la surface en coin est incurvée, en particulier de manière prismatique, ou **en ce que** la surface en coin (34) est incurvée dans un premier sens (44) et dans un second sens (46) différent du premier sens (44).

11. Machine-outil selon l'une des revendications 1 à 10, **caractérisée en ce que,** comme dispositif de réglage pour la butée réglable (22, 24, 72), une vis différentielle (30, 32, 74, 126) est prévue, laquelle est guidée sur la butée (22, 24, 72) et dans le corps de base (12, 116).

12. Machine-outil selon la revendication 11, **caractérisée en ce que** la butée réglable (22) présente une surface d'appui incurvée (34) ayant un sommet (43), le système de guidage linéaire (50) présentant une section de guidage incurvée en arc de cercle (55, 252, 254), l'axe (68) de la vis différentielle (30) étant au centre de ladite section de guidage incurvée en arc de cercle, et le rayon de courbure de la surface d'appui (34) au sommet (43) n'étant pas supérieur à 14 fois la distance du sommet (43) par rapport à l'axe (68) de la vis différentielle (30), et/ou **en ce que** l'axe (121) de la vis différentielle (126) est incliné par rapport à la surface d'appui de fond pour l'élément de plaque (114) de l'assise de plaque (112).

13. Machine-outil selon l'une des revendications 1 à 12, **caractérisée en ce que** l'élément de plaque (83) présente un coin de plaque (99) induisant un diamètre, l'au moins une butée réglable (22) comportant le dispositif de réglage (30) associé à la butée réglable (22) étant disposée sur l'assise de plaque (18) de sorte que la force de réglage (93) introduite dans l'élément de plaque (83) par réglage de la butée (22) au moyen du dispositif de réglage (30) s'applique de manière orientée vers le coin de plaque (99).

14. Machine-outil selon l'une des revendications 1 à 13, **caractérisée en ce que** l'élément de plaque (16) repose avec une surface latérale de la plaque commune (40) sur la butée réglable (22) et sur la butée supplémentaire (24), ou **en ce que** l'élément de plaque (16) repose avec des surfaces latérales de plaque différentes (40, 45) sur la butée réglable (22) et sur la butée supplémentaire (72).

15. Machine-outil selon l'une des revendications 1 à 14, **caractérisée en ce que** l'élément de plaque est une plaque de coupe (16, 83, 114, 132, 176) ou une plaque de guidage (170, 172, 174).

16. Utilisation d'une machine-outil selon l'une des revendications 1 à 15 comme outil d'alésage (10), comme outil de perçage (110), en particulier comme outil de perçage et/ou de perçage de précision (130), ou comme outil de fraisage pour usiner une pièce dans une machine-outil, la machine-outil étant entraînée en rotation autour d'un axe d'outil (14, 154) par rapport à la pièce ou autour de la pièce par rapport à la machine-outil.

17. Procédé de réglage d'une machine-outil (10) réalisée selon l'une des revendications 1 à 15, comprenant les étapes :
i. de prépositionnement d'un élément de plaque (16, 176) dans l'assise de plaque (18, 162) par l'ajustement d'au moins une butée (22, 192) à une dimension inférieure ;
ii. de fixation, de manière définie, de l'élément de plaque (16, 176) dans l'assise de plaque (18, 162) sur le corps de base (12, 152) au moyen de la vis (20, 184) s'engageant à travers un alésage (42, 185) dans l'élément de plaque (16, 176) ;
iii. de réajustement de l'au moins une butée (22, 192) avec une mesure simultanée du réglage de l'élément de plaque (16, 176) par rapport à une dimension de consigne.
